# EUROPEAN PATENT SPECIFICATION

(11) **EP 2 639 204 B1**
(45) Date of publication and mention of the grant of the patent: **12.07.2017**
(21) Application number: 12159621.7
(22) Date of filing: 15.03.2012
(51) Int. Cl.: C02F 1/76, C01B 11/02

(54) **Process and device for generating chlorine dioxide for the disinfection of water**
Verfahren und Vorrichtung zur Erzeugung von Chlordioxid zur Desinfektion von Wasser
Procédé et dispositif pour produire du dioxyde de chlore pour la désinfection de l'eau

(43) Date of publication of application: 18.09.2013
(73) Proprietor: Evoqua Water Technologies GmbH, 89312 Günzburg (DE)
(72) Inventor: Groß, Erik, 89312 Günzburg (DE); Schnitzler, Simon, 89346 Bibertal (DE)
(74) Representative: Holzer, Janine

(56) References cited:
- WO-A1-2011/086147
- US-A- 4 075 308
- US-A- 4 414 193
- US-A1- 2003 138 371
- US-A1- 2010 320 157

## Description

The invention relates to a process and to a device for the generation of chlorine dioxide, usable for the disinfection of water, especially for the disinfection of drinking water. More specifically, the invention relates to a method and to a device for an on-site generation of chlorine dioxide to be introduced into the water for disinfection.

Chlorine dioxide (ClO₂) is a well known oxidation and disinfection chemical in the preparation of drinking or processing water. In contrast to other chlorine chemicals used for the disinfection of water like chlorine or sodium hypochlorite, the disinfection result of chlorine dioxide is not affected by the pH-value of the water to be treated. Chlorine dioxide is solved physically in water without changing the pH-value.

Chlorine dioxide is a powerful chemical to remove awkward odors or flavors in water like phenol or decomposition products of algae by oxidation. Unwanted byproducts like trihalomethanes or chloramines are not generated when chlorine dioxide is used for oxidation. Therefore, chlorine dioxide is a usable alternative to chlorine or other chlorine chemicals for the disinfection or preparation of drinking water or processing water.

However, one drawback of chlorine dioxide is its tendency to explode when a critical concentration is exceeded. In air chlorine dioxide tends to explode at concentrations more than 10 Vol.-%. Solved in a liquid phase gaseous chlorine dioxide above the liquid can explode when the concentration of chlorine dioxide in the liquid exceeds 8 g/l. Having chlorine dioxide as a solute in an aqueous solution with a concentration above 30 g/l, the aqueous solution itself may explode without having a gaseous phase. Therefore, due to safety reasons chlorine dioxide has to be generated on-site prior to use rather than produced at a central location and shipped to the point of use.

These problems have lead to a variety of generation processes for the production of chlorine dioxide. For example US 2003/138371 A1 refers to a process for generating gaseous chlorine dioxide-chlorine mixtures using a continuous plug flow reactor wherein two liquid reactants are introduced in an reactor creating a horizontal plug flow. US 4 414 193 A describes another procedure using liquids being fed to a reaction zone for the preparation of chlorine dioxide in particular for effecting waste water treatment. Moreover, WO 2011/086147A concerns a process for the production of chlorine dioxide from chlorate ions with methanol as a reducing agent.

The two basic types of these processes are differentiated by use of either sodium chlorite or sodium chlorate as the precursor chemical.

Sodium chlorite based processes are, in general, small, safe and very easy to operate. In sodium chlorite based processes sodium chlorite for example is reacted with hydrogen chlorite, hydrochloric acid or chlorine to form chlorine dioxide. Dependent from the type of the sodium chlorite based process the net production of chlorine dioxide in weight percentages of the used sodium chlorite may vary. Though these processes are all relatively simple to operate when compared to the chlorate based processes, the chlorine dioxide produced from sodium chlorite is four to five times as expensive as that produced with a sodium chlorate based process. The reason for that is that sodium chlorate is used as the precursor chemical in the industrial production of sodium chlorite. The costs of sodium chlorite are therefore much higher as compared to the costs of sodium chlorate.

However, sodium chlorate based processes are, in general, much larger and more complex to operate than chlorite based processes. For example, when using the Mathieson-Process for generating chlorine dioxide, sodium chlorate is reacted with the two other chemicals sulfuric acid and sulfur dioxide. Sodium chlorate reactors are much more capital intensive as sodium chlorite reactors. For the generation of comparably small amounts of chlorine dioxide as needed for the disinfecting of drinking or processing water, chlorate based processes are considered as not cost-effective.

Because of the costs and operational differences of the chlorite and chlorate based processes, there has been a drive to downscale chlorate processes to chlorite generation systems, providing thereby a sodium chlorate process, which is commercially successful even for the production of small amounts of chlorine dioxide. EP 0 515 767 B1 for example discloses a sodium chlorate based process for the generation of chlorine dioxide, where under reduced pressure an aqueous chlorate solution is mixed with a gaseous stream of an acid. The process is considered as usable for an on-site production as the reaction product is primarily chlorine dioxide and is formed almost instantaneously. The aqueous chlorate solution and the gaseous stream of the acid are mixed in a reaction chamber upstream of a venturi tube. A driving medium is introduced into the inlet of the venturi tube such that mixing of the driving medium and the chlorine dioxide takes place down stream of the venturi tube.

However, the sodium chlorate based process for generating chlorine dioxide according to EP 0 515 767 B1 has the drawback, that chlorine dioxide is not effectively separated from the toxic chlorate. This in turn makes it impossible to use this process for the disinfection of drinking water or processing water.

It is therefore an object of this invention to provide for a process and for a device for the generation of chlorine dioxide, which are cost-effective even in the production of relatively small amounts of chlorine dioxide and which are usable for the on-site production of chlorine dioxide for the disinfection of drinking water and processing water.

The object with regard to the process is achieved with regard to the invention by providing a cartridge having a first inlet and an outlet, the cartridge in terms of flow being filled with dry or humid sodium chlorate between the first inlet and the outlet, introducing a stream of an acid through the first inlet into the cartridge, wherein the sodium chlorate within the cartridge is given in excess as compared to the introduced acid, wherein the acid is reacting with the sodium chlorate to form chlorine dioxide and water, wherein the water and at least one part of the not reacted sodium chlorate are forming a saturated aqueous sodium chlorate solution and wherein the chlorine dioxide is forming a gaseous phase above the saturated aqueous sodium chlorate solution, taking out through the outlet a gaseous stream of the chlorine dioxide from the gaseous phase, providing the gaseous stream of the chlorine dioxide to be introduced into the water to be disinfected, monitoring during the generation of chlorine dioxide an increasing liquid level within the cartridge, and indicating a replacement of the cartridge, when the liquid level has reached a specified value.

The invention realizes that the reaction of sodium chlorate with an acid is useful for an efficient and comparatively inexpensive production of chlorine dioxide. Only two reactants are needed and besides chlorine dioxide only chlorine itself is produced as a chlorine based by-product, which is a well known chemical for the disinfection of water. Principally, the process is usable for an on-site production.

However, the chlorate must be separated from the generated chlorine dioxide to get the process admitted for an on-site generation of chlorine dioxide for the disinfection of water.

The invention solves this problem by the introduction of a cartridge having a first inlet and an outlet, the cartridge in terms of flow being filled with sodium chlorate between the first inlet and the outlet. When an acid stream is introduced through the first inlet into the cartridge, the acid within the cartridge reacts with the sodium chlorate to at least chlorine dioxide and water. The generated water and the not reacted sodium chlorate are forming an aqueous sodium chlorate solution and chlorine dioxide is forming a gaseous phase above the sodium chlorate containing liquid solution. These two clearly separated phases within the cartridge, namely the gaseous chlorine dioxide phase and the liquid aqueous sodium chlorate phase, enable to take out a gaseous stream of the generated chlorine dioxide with no chlorate contained as a contamination. The invention therefore provides for a process for generating chlorine dioxide on-site for the disinfection of drinking or processing water. The generated gaseous chlorine dioxide stream does not contain any chlorate.

Moreover, during the generation of chlorine dioxide the cartridge is filled with a saturated aqueous sodium chlorate solution. The increasing liquid level within the cartridge is monitored, for example with a conductivity sensor or with an optical sensor, and a maximum liquid level indicates that the cartridge is exhausted and must be replaced. Regarding the given reaction of sodium chlorate with hydrochloric acid:

NaClO₃ + 2 HCl →ClO₂ + 1/2 Cl₂ + NaCl + H₂O,

which allows an efficient production of chlorine dioxide, there is also the side reaction:

NaClO₃ + 6 HCl → 3 Cl₂ + NaCl + 3 H₂O,

where no chlorine dioxide is produced.

Therefore, for the generation of chlorine dioxide the second reaction must be suppressed. This is the case, when sodium chlorate is given in excess as compared to the hydrochloric acid. However, in known sodium chlorate based processes an excess amount of sodium chlorate will increase the risk to have chlorate added to the generated chlorine dioxide. The invention however solves also this problem.

During operation of the process according to the invention a saturated sodium chlorate solution is produced within the cartridge. Although sodium chlorate within the cartridge therefore is contained in excess as compared to the introduced acid, no chlorate will contaminate the generated chlorine dioxide. Chlorine dioxide forms a gaseous phase separated from an aqueous liquid phase, wherein sodium chlorate is solved.

The invention is not restricted to use hydrochloric acid to generate chlorine dioxide from sodium chlorate. Also hypo-chloric acid may be used as an acid according to the invention.

In a preferred embodiment of the invention the gaseous stream of the chlorine dioxide is sucked off through the outlet by applying a reduced pressure at the outlet. This allows a safe and comfortable dosing of chlorine dioxide into the water to be disinfected.

According to another preferred embodiment the acid stream is introduced through the first inlet into the cartridge by generating a reduced pressure inside the cartridge.

It is favorable to generate the reduced pressure within the cartridge by applying a reduced pressure at the outlet. Acid then is only introduced into the cartridge when chlorine dioxide is sucked off through the outlet. This allows a very safe operation of the system as the generation of chlorine dioxide will stop automatically when no chlorine dioxide is taken out from the cartridge. Within the cartridge chlorine dioxide is only freshly generated when the pressure in the cartridge is low enough to introduce acid through the first inlet.

In still another embodiment the introduction of the acid stream is vacuum controlled. The acid stream for example is stopped with a vacuum safety valve in the acid duct, which blocks the duct when the pressure at the inlet of the cartridge exceeds a certain value.

In yet another favorable embodiment of the invention the gaseous stream of the chlorine dioxide is introduced into a by-pass-stream of the water to be disinfected. A by-pass-stream of the water to be disinfected allows controlling additionally the dosed amount of chlorine dioxide by regulating the flow volume in the by-pass-duct.

Preferably, an injector device for introducing gaseous chlorine dioxide is coupled to the by-pass-stream of the water to be disinfected. According to a favorable embodiment the injector device is a venturi tube driven through the water flow itself. When water is flowing through the venturi tube at an inlet side a low pressure is generated, which is used for sucking off gaseous chlorine dioxide from the outlet of the cartridge. The chlorine dioxide is then directly introduced into the water stream flowing through the venturi tube. If no water is flowing through the by-pass-duct, no vacuum is generated at the inlet side of the venturi tube and the production of chlorine dioxide within the cartridge is automatically stopped. A venturi tube or an injector device driven by the water to be disinfected itself and coupled to the outlet of the cartridge allows a cost-effective and safe operation of a system for the disinfection of water with an on-site generation of chlorine dioxide.

In another preferred embodiment the cartridge has a second inlet and a gaseous stream of an inert-gas is introduced through the second inlet into the cartridge. With the introduction of an inert-gas the concentration of the chlorine dioxide within the cartridge can be simply controlled and it is possible to keep the concentration of the chlorine dioxide well below the critical threshold for an explosion. Advantageously, as an inert-gas air is used, the air being sucked through an air filter into the cartridge.

According to yet another favorable embodiment also the inert-gas is introduced into the cartridge by the aid of a vacuum or a reduced pressure inside the cartridge. The reduced pressure within the cartridge advantageously is generated by applying low pressure at the first inlet of the cartridge, which may generated by the water to be disinfected itself. This embodiment further increases the safety of the disclosed generation of chlorine dioxide.

In yet another embodiment the inert-gas is sucked in through a porous tube within the cartridge. In particular, the porous tube extends from the outlet-side of the cartridge into the sodium chlorate. This allows a uniform ventilation of the gas compartment or gas phase within the cartridge with the inert-gas, which would not be possible in case of a second inlet directly arranged at the outlet side of the cartridge. In contrast to a tube immerging into the sodium chlorate with a porous tube the inert-gas has not to be sucked through the sodium chlorate into the cartridge. With a porous tube also the generation of foam is suppressed. The loss of pressure is nearly independent from the fluid level.

In another preferred embodiment the gaseous stream of the chlorine dioxide is not dosed directly to the water to be disinfected but is transferred first from the cartridge into a chlorine dioxide reservoir. Compared with a direct injection of the generated chlorine dioxide into the water to be disinfected, a chlorine dioxide reservoir allows an injection of chlorine dioxide with different amounts in multiple water streams at different locations. For a safe storage of chlorine dioxide within the chlorine dioxide reservoir it is favorable to introduce water into the reservoir to lower the concentration of gaseous chlorine dioxide and to generate an aqueous chlorine dioxide solution at the bottom of the reservoir. When for example the water is sprayed into the gaseous chlorine dioxide atmosphere within the reservoir, the concentration of gaseous chlorine dioxide will decrease and an aqueous solution of chlorine dioxide is formed. Therefore, the concentration of gaseous chlorine dioxide within the reservoir can be simply kept under the critical threshold for explosion. The aqueous solution of the chlorine dioxide within the reservoir is dosed into the water to be disinfected. Fluctuations of the concentration of chlorine dioxide within the aqueous solution are avoided if the volume of the liquid phase within the chlorine dioxide reservoir does not exceed 20 % - 40 % of the free volume.

According to another embodiment the gaseous chlorine dioxide generated in the cartridge is introduced into a recirculating stream of the aqueous chlorine dioxide solution of the chlorine dioxide reservoir. It is further preferred to introduce an injector device like a venturi tube into the recirculating stream for sucking the gaseous stream of the chlorine dioxide from the outlet of the cartridge into the chlorine dioxide reservoir.

In another advantageous embodiment of the invention a gaseous stream of the atmosphere in the chlorine dioxide reservoir is introduced into an adsorber device. The adsorber device collects gases from the atmosphere within the chlorine dioxide reservoir and may adsorb chlorine dioxide therein. Gas from the atmosphere within the chlorine dioxide reservoir can also be used as an inert-gas to be introduced through the second inlet into the cartridge. In case of water is used for washing out the atmosphere within the chlorine reservoir, the chlorine dioxide concentration in the atmosphere of the chlorine dioxide reservoir is lower than within the gaseous atmosphere of the cartridge.

In accordance with the teachings of the present invention, there is also disclosed a device for generating chlorine dioxide for the disinfection of water, the device is comprising a cartridge having a first inlet and an outlet, the cartridge in terms of flow being filled with dry or humid solid sodium chlorate between the first inlet and outlet, and an acid reservoir having an outlet, the outlet of the acid reservoir with an acid duct is being connected with the first inlet of the cartridge, wherein the sodium chlorate within the cartridge is contained in excess as compared to the introduced acid, and the outlet of the cartridge is providing chlorine dioxide for the disinfection of water.

The device especially is usable for carrying out the process for the generation of chlorine dioxide using sodium chlorate as precursor chemical as already described above.

According to a preferred embodiment the device is further comprised of a low pressure duct, which is connected to the outlet of the cartridge. The cartridge itself is preferably leakproof and is set during operation under low pressure. As already described in this document, this embodiment allows a safe operation of the process for generating chlorine dioxide. The gaseous chlorine dioxide generated in the cartridge is sucked off through the inlet, thereby generating a low pressure also within the cartridge and the acid is introduced into the cartridge only as long as chlorine dioxide is taken out. In case no gaseous chlorine dioxide is taken out, the generation of chlorine dioxide stops because no acid is introduced into the cartridge.

In yet another preferred embodiment a vacuum-safety-valve is implemented in the acid duct. With this valve preferably the acid duct is blocked in case that no vacuum or low pressure is applied to the outlet of the cartridge, or generated within the low pressure duct.

In another embodiment of the invention the outlet of the cartridge is connected to a by-pass-duct of the water to be disinfected. By regulating the water flow through the by-pass-duct the amount of chlorine dioxide which has to be introduced into a specific water volume is simply controllable.

With a venturi tube mounted in the by-pass-duct the low pressure for sucking off the gaseous chlorine dioxide through the outlet of the cartridge is generated by the water flow in the by-pass-duct itself. This allows a very safe operation of the process for generating chlorine dioxide. If no water flows through the by-pass-duct, the generation of chlorine dioxide within the cartridge is automatically stopped.

According to yet another embodiment the cartridge further comprises a second inlet, the second inlet is connected to an inert-gas supply. The inert-gas will decrease the concentration of the produced chlorine dioxide in the atmosphere within the cartridge. In particular, the flow of the inert-gas into the cartridge is controlled to keep the concentration of the gaseous chlorine dioxide within the cartridge below the critical concentration for an explosion. Preferably, a control valve is implemented within the inert-gas duct for controlling the inert-gas flow to the cartridge.

Advantageously, the second inlet is a porous tube, allowing a uniform ventilation of the gas compartment or gas phase within the cartridge with the inert-gas. This would not be possible in case of a second inlet directly arranged at the outlet side of the cartridge. In particular, the porous tube is extending from the outlet-side of the cartridge into the sodium chlorate. In contrast to a tube immerging into the sodium chlorate the inert-gas has not to be sucked through the sodium chlorate into the cartridge. With a porous tube also the generation of foam is suppressed and the loss of pressure is nearly independent from the fluid level.

In still another advantageous embodiment of the invention the outlet of the cartridge is connected with a chlorine dioxide reservoir. A chlorine dioxide reservoir allows dosing the generated chlorine dioxide at different locations with different amounts. Preferably, the chlorine dioxide reservoir comprises a water inlet connected to a water supply. With water gaseous chlorine dioxide is washed out and is solved in a liquid aqueous phase within the reservoir. The liquid phase is used for dosing the chlorine dioxide into the water to be disinfected. In another favorable embodiment the water of the chlorine dioxide reservoir is recirculated in a recirculating duct and the chlorine dioxide form the cartridge is introduced into the chlorine dioxide reservoir through an injector device implemented in the recirculating duct. Preferably the injector device is a venturi tube.

According to yet another embodiment the chlorine dioxide reservoir has an outlet coupled to the gaseous atmosphere therein, the outlet being connected via a gas duct to an adsorber device. The adsorber device collects gas from the chlorine dioxide reservoir when water is introduced thereby decreasing the free volume within the reservoir.

Preferably, the gas duct between the chlorine dioxide reservoir and the adsorber device is connected to the second inlet of the cartridge. This allows using gas from the atmosphere within the chlorine dioxide reservoir as a inert-gas to reduce the concentration of chlorine dioxide within the gaseous phase in the cartridge.

These and various other features of the present invention will become better understood upon reading of the following description of preferred embodiments in conjunction with the accompanying drawings.
- FIG 1: is a schematic view of a first device for the generation of chlorine dioxide based on sodium chlorate for the disinfection of water and
- FIG 2: is a schematic view of a second device for generating chlorine dioxide based on sodium chlorate for the disinfection of water.

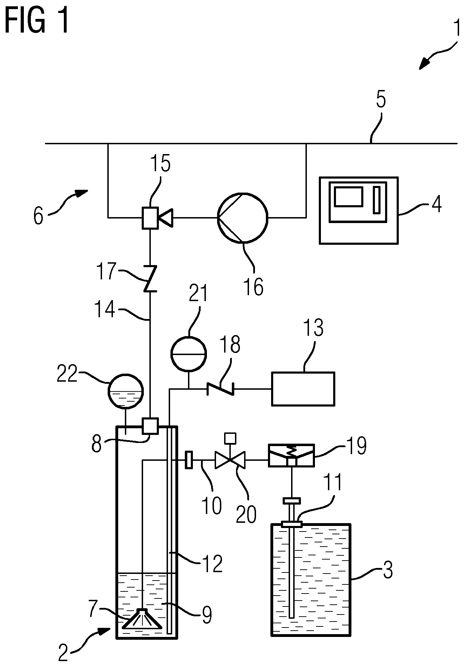

The device 1 according to FIG 1 is useful for an on-site production of chlorine dioxide for the disinfection of water. The device 1 allows a safe generation of chlorine dioxide based on sodium chlorate, where chlorate is separated from the produced chlorine dioxide. The produced chlorine dioxide is introduced into the water to be disinfected.

The device 1 according to FIG 1 comprises a leakproof cartridge 2, an acid reservoir 3 and a controller 4. The water to be disinfected is flowing through a water duct 5. The generated chlorine dioxide is dosed into a side stream of the water to be disinfected flowing in a by-pass-duct 6.

The cartridge 2 comprises a first inlet 7 and an outlet 8 and in terms of flow is filled between the first inlet 7 and the outlet 8 with dry or humid solid sodium chlorate 9. The first inlet 7 and the outlet 8 are arranged at the bottom and at the top of the cartridge 2 respectively. The first inlet 7 of the cartridge 2 is connected with an acid duct 10 with an outlet 11 of the acid reservoir 3. Further, within the cartridge 2 a porous tube 12 is arranged, which is connected to an air filter 13. The porous tube 12 extends from the outlet-side of the cartridge 2 into the sodium chlorate 9.

The outlet 8 of the cartridge 2 is connected with a low pressure duct 14 to a venturi tube 15, which is inserted in the by-pass-duct 6. During operation a by-pass-stream of the water to be disinfected is flowing through the venturi tube 15 thereby generating a vacuum or low pressure at one inlet of the tube 15, which is connected to the low pressure duct 14. For regulating the water flow through the by-pass-duct 6 a water pump 16 is implemented. The vacuum or pressure generated in a venturi tube 15 is thereby applied at the outlet 8 of the cartridge 2 and low pressure also is generated within the cartridge 2.

With the low pressure within the cartridge 2 acid from the acid reservoir 3 flows through the acid duct 10 and through the first inlet 7 into the cartridge 2. Within the cartridge 2 the acid is reacting with the sodium chlorate 9 to at least gaseous chlorine dioxide and water. As a side product also gaseous chlorine will be produced. Not reacted sodium chlorate forms with the generated water an aqueous sodium chlorate solution. The generated chlorine dioxide forms a gaseous phase in the free volume of the cartridge 2 above the liquid level. Chlorine dioxide and sodium chlorate 9 are totally separated within the cartridge 2, as the generated chlorine dioxide is in its gaseous phase and the sodium chlorate is solved in the liquid water phase. No chlorate will be present in the gaseous phase of the chlorine dioxide.

In addition, as a result of the vacuum within the cartridge 2 further air is flowing into the cartridge 2 though the air filter 13 and through the porous tube 12. With the air flow the concentration of the chlorine dioxide in the atmosphere of the cartridge 2 is kept below the critical concentration for an explosion. Freshly generated chlorine dioxide is sucked off through the outlet 8 and through the low pressure duct 14 into the reaction chamber of the venturi tube 15, where it is directly introduced into the by-pass-flow of the water to be disinfected.

Further, check valves 17 and 18 are implemented in the low pressure duct 14 and in the air duct between the porous tube 12 and the air filter 13. The check valve 17 avoids a water flow to the cartridge 2 during a shutdown period of the device 1. With the check valve 18 as implemented, no chlorine dioxide can flow from the cartridge 2 into the environment. Additionally, a safety vacuum valve 19 and a control valve 20 are arranged within the acid duct 10. With the control valve 20 the acid stream into the cartridge 2 is controlled by the controller 4. The safety vacuum valve 19 blocks the acid duct 10 when a pressure sensor 21 in the air duct between the cartridge 2 and the air filter 13 indicates a vanishing vacuum or an increase of pressure respectively. The safety vacuum valve 19 enables a very safe operation of the device 1. If no water is flowing through the venturi tube 15 the chlorine dioxide production within the cartridge 2 is stopped automatically as the safety vacuum valve 19 stops any acid flow into the cartridge 2.

The fluid level 22 within the cartridge 2 will increase during generation of chlorine dioxide. When the liquid level 22 has reached a certain specified value a replacement of the cartridge 2 is indicated. The fluid level 22, in particular the maximum fluid level, for example is measured with a conductivity sensor or with an optical sensor.

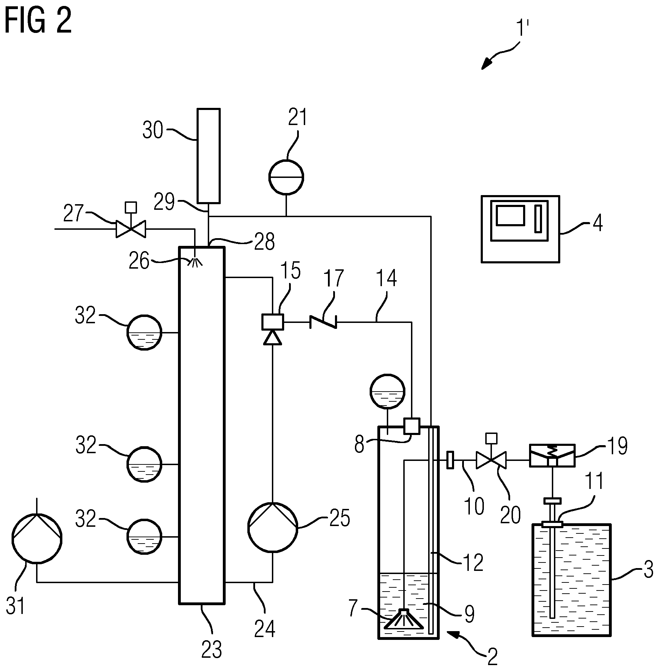

FIG 2 shows another device 1' for an on-site generation of chlorine dioxide based on sodium chlorate 9 for the disinfection of water. The device 1' differs from the device 1 according to FIG 1 as the generated chlorine dioxide of the cartridge 2 is not directly dosed into the water to be disinfected.

Additionally, the device 1' comprises a chlorine dioxide reservoir 23 in which the chlorine dioxide generated in the cartridge 2 is stored during operation. Further comprised is a recirculating duct 24 where a liquid phase within the chlorine dioxide reservoir 23 is recirculated by the use of the liquid pump 25. On the top of the chlorine dioxide reservoir 23 a water inlet 26 is arranged. The amount of water flowing through the inlet 26 is controlled by control valve 27.

During operation water is sprayed through the water inlet 26 into the chlorine dioxide reservoir thereby washing out the gaseous chlorine dioxide therein and the chlorine dioxide concentration in the atmosphere will be comparatively low. The chlorine dioxide reservoir 23 is filled with water upon the maximum of the fluid levels 32. Gas contained in the chlorine dioxide reservoir 23 is introduced through an outlet 28 and through a gas duct 29 into an adsorber device 30. The water with solved chlorine dioxide therein is recirculated in the recirculating duct 24. In the recirculating duct 24 of the chlorine dioxide reservoir 23 as an injector device another venturi tube 15 is arranged, generating a vacuum to suck chlorine dioxide through the outlet of the cartridge 2. The generated chlorine dioxide is added to the recirculating fluid and is transferred together with the fluid into the chlorine dioxide reservoir 23. Gas, which is transferred from the chlorine dioxide reservoir 23 to the adsorber device 30 is used as inert-gas for the cartridge 2 to reduce the concentration of gaseous chlorine dioxide therein.

The liquid water within the chlorine dioxide reservoir 23 contains per volume a specific amount of solved chlorine dioxide. This chlorine dioxide containing water is used for dosing chlorine dioxide into the water to be disinfected via a pump 31. In contrast to device 1 inert-gas for decreasing the chlorine dioxide concentration in the cartridge 2 is not introduced into the water to be disinfected. The inert-gas is separated within the chlorine dioxide reservoir 23. The device 1' according to FIG 2 is usable for dosing chlorine dioxide at different locations with different concentrations into different water streams to be disinfected.

## Claims

1. A process for generating chlorine dioxide for the disinfection of water, comprising the steps of
providing a cartridge (2) having a first inlet (7) and an outlet (8), the cartridge (2) in terms of flow being filled with dry or humid solid sodium chlorate (9) between the first inlet (7) and the outlet (8), introducing a stream of an acid through the first inlet (7) into the cartridge (2), wherein the sodium chlorate within the cartridge is given in excess as compared to the introduced acid, wherein the acid is reacting with the sodium chlorate (9) to form chlorine dioxide and water, wherein the water and at least one part of the not reacted sodium chlorate (9) are forming a saturated aqueous sodium chlorate solution and
wherein the chlorine dioxide is forming a gaseous phase above the saturated aqueous sodium chlorate solution,
taking out through the outlet (8) a gaseous stream of the chlorine dioxide from the gaseous phase,
providing the gaseous stream of the chlorine dioxide to be introduced into the water to be disinfected,
monitoring during the generation of chlorine dioxide an increasing liquid level within the cartridge (2), and
indicating a replacement of the cartridge, when the liquid level (22) has reached a specified value.

2. The process of claim 1, further **characterized in that** the gaseous stream of the chlorine dioxide is sucked off through the outlet (8) by applying a reduced pressure at the outlet (8),
wherein acid is only introduced into the cartridge when chlorine dioxide is sucked off through the outlet.

3. The process of claim 1 or 2, further **characterized in that** the acid stream is introduced through the first inlet (7) by generating a reduced pressure inside the cartridge (2).

4. The process of any of preceding claims, further **characterized in that** the introduction of the acid stream is vacuum controlled.

5. The process of any of the preceding claims, further **characterized in that** the gaseous stream of the chlorine dioxide is introduced into a by-pass-stream of the water to be disinfected.

6. The process of claim 5, further **characterized in that** the by-pass-stream is pumped through a venturi tube (15), the venturi tube (15) thereby is generating a low pressure, is sucking off with the aid of the low pressure the gaseous stream of the chlorine dioxide from the outlet (8) of the cartridge (2) and is mixing the gaseous stream of the chlorine dioxide with the by-pass-stream of the water to be disinfected.

7. The process to any of the preceding claims, further **characterized in that** the cartridge (2) having a second inlet (12), where a gaseous stream of an inert-gas is introduced through the second inlet (12) into the cartridge (2).

8. The process of claim 7, further **characterized in that** the gaseous stream of the inert-gas is sucked in through the second inlet (12) by generating a reduced pressure inside the cartridge (2).

9. The process of claim 7 or 8, further **characterized in that** the gaseous stream of the inert-gas is sucked through a porous tube (12) within the cartridge (2).

10. The process of any of the preceding claims, further **characterized in that** the gaseous stream of the chlorine dioxide is transferred from the cartridge (2) into a chlorine dioxide reservoir (23).

11. The process of claim 10, further **characterized in that** water is introduced into the chlorine dioxide reservoir (23) thereby generating an aqueous chlorine dioxide solution.

12. The process of claim 11, further **characterized in that** the gaseous stream of the chlorine dioxide is introduced into a recirculating stream of the aqueous chlorine dioxide solution of the chlorine dioxide reservoir (23).

13. The process of claim 12, further **characterized in that** the recirculating stream is pumped through a venturi tube (15), the venturi tube (15) thereby is generating a low pressure, is sucking with the aid of the low pressure the gaseous stream of the chlorine dioxide from the outlet (8) of the cartridge (2) and is mixing the gaseous stream of said chlorine dioxide with the recirculating stream of the aqueous chlorine dioxide solution of the chlorine dioxide reservoir (23).

14. The process of any of claims 10 to 13, further **characterized in that** a gaseous stream of the atmosphere within the chlorine dioxide reservoir (23) is introduced into an adsorber device (30).

15. The process of claim 14, **characterized in that** a gaseous stream is been taken out from the adsorber device (30) and is introduced as the inert-gas through the second inlet (12) into the cartridge (2).

16. A device (1, 1') for generating chlorine dioxide for the disinfection of water, comprising a cartridge (2) having a first inlet (7) and an outlet (8),
the cartridge (2) in terms of flow being filled with dry or humid solid sodium chlorate (9) between the first inlet (7) and the outlet (8), and
an acid reservoir (3) having an outlet (11), the outlet (11) of the acid reservoir (3) via an acid duct (10) is being connected with the first inlet (7) of the cartridge (2), wherein the sodium chlorate within the cartridge is contained in excess as compared to the introduced acid,
and the outlet (8) of the cartridge (2) is providing chlorine dioxide for the disinfection of water, and
a sensor for monitoring during the generation of chlorine dioxide an increasing liquid level within the cartridge (2) and for measuring a specified value of the liquid level (22) for indication of a replacement of the cartridge (2).

17. The device (1, 1') of claim 16, further **characterized in that** the outlet (8) of the cartridge (2) is connected to a low pressure duct (14).

18. The device (1, 1') of claim 16 or 17, further **characterized in that** the cartridge (2) is leakproof and is set under low pressure during operation, wherein acid is only introducable into the cartridge when chlorine dioxide is sucked off through the outlet.

19. The device (1, 1') of any of the claims 16 to 18, further **characterized in that** a vacuum-safety-valve (19) is implemented in the acid duct (10).

20. The device (1, 1') of any of the claims 16 to 19, further **characterized in that** the outlet (8) of the cartridge (2) is connected to a by-pass-duct (6) of the water to be disinfected.

21. The device (1, 1') of claim 20, further **characterized in that** a venturi tube (15) having a low pressure inlet is mounted in the by-pass-duct (6), the venturi tube (15) with its low pressure inlet is connected to the outlet (8) of the cartridge (2).

22. The device (1, 1') of any of claims 16 to 21, further **characterized in that** the cartridge (2) having a second inlet (12), the second inlet (12) is connected to an inert-gas supply (13).

23. The device (1, 1') of claim 22, further **characterized in that** the second inlet is a porous tube (12) within the cartridge (2), which in particular extends from the outlet-side into the sodium chlorate (9).

24. The device (1, 1') of any of the claims 16 to 23, further **characterized in that** the outlet (8) of the cartridge (2) is connected with a chlorine dioxide reservoir (23).

25. The device (1, 1') of claim 24, further **characterized in that** the chlorine dioxide reservoir (23) comprises a water inlet (26), the water inlet (26) is connected to a water supply.

26. The device (1, 1') of claim 25, further **characterized in that** the outlet (8) of the cartridge (2) is connected to a recirculating duct (24) recirculating an aqueous chlorine dioxide solution of the chlorine dioxide reservoir (23).

27. The device (1, 1') of claim 26, further **characterized in that** a venturi tube (15) having a low pressure inlet is mounted in the recirculating duct (24), the venturi tube (15) with its low pressure inlet is connected to the outlet (8) of the cartridge (2).

28. The device (1, 1') of any of claims 24 to 27, further **characterized in that** the chlorine dioxide reservoir (23) having an outlet (28) for a gaseous stream of the atmosphere therein, the reservoir (23) is connected via a gas duct (29) to an adsorber device (30).

29. The device of claim 28, **characterized in that** the gas duct (29) between the chlorine dioxide reservoir (23) and the adsorber device (30) is connected to the second inlet (12) of the cartridge (2).

## Patentansprüche

1. Ein Verfahren zum Erzeugen von Chlordioxid zur Desinfektion von Wasser, umfassend die folgenden Schritte:
Bereitstellen einer einen ersten Einlass (7) und einen Auslass (8) aufweisenden Kartusche (2), wobei die Kartusche (2) in Bezug auf Strömung mit trockenem oder feuchtem festen Natriumchlorat (9) zwischen dem ersten Einlass (7) und dem Auslass (8) gefüllt ist, Einbringen eines Stroms einer Säure durch den ersten Einlass (7) in die Kartusche (2), wobei das Natriumchlorat in der Kartusche verglichen mit der eingebrachten Säure im Überschuss gegeben ist, wobei die Säure mit dem Natriumchlorat (9) reagiert, um Chlordioxid und Wasser zu bilden, wobei das Wasser und mindestens ein Teil des nicht reagierten Natriumchlorats (9) eine gesättigte wässrige Natriumchloratlösung bilden und
wobei das Chlordioxid eine gasförmige Phase über der gesättigten wässrigen Natriumchloratlösung bildet,
Entnehmen eines gasförmigen Stroms des Chlordioxids aus der gasförmigen Phase durch den Auslass (8),
Bereitstellen des in das zu desinfizierende Wasser einzubringenden gasförmigen Stroms des Chlordioxids,
Überwachen eines zunehmenden Flüssigkeitsstands in der Kartusche (2) während des Erzeugens des Chlordioxids, und
Anzeigen eines Auswechselns der Kartusche, wenn der Flüssigkeitsstand (22) einen vorgegebenen Wert erreicht hat.

2. Verfahren gemäß Anspruch 1, weiter **dadurch gekennzeichnet, dass** der gasförmige Strom des Chlordioxids durch Anlegen eines reduzierten Drucks an den Auslass (8) durch den Auslass (8) abgesaugt wird,
wobei Säure nur in die Kartusche eingebracht wird, wenn Chlordioxid durch den Auslass abgesaugt wird.

3. Verfahren gemäß Anspruch 1 oder 2, weiter **dadurch gekennzeichnet, dass** der Säurestrom durch den ersten Einlass (7) eingebracht wird, indem ein reduzierter Druck in der Kartusche (2) erzeugt wird.

4. Verfahren gemäß einem der vorangehenden Ansprüche, weiter **dadurch gekennzeichnet, dass** das Einbringen des Säurestroms vakuumgesteuert ist.

5. Verfahren gemäß einem der vorangehenden Ansprüche, weiter **dadurch gekennzeichnet, dass** der gasförmige Strom des Chlordioxids in einen Bypass-Strom des zu desinfizierenden Wassers eingebracht wird.

6. Verfahren gemäß Anspruch 5, weiter **dadurch gekennzeichnet, dass** der Bypass-Strom durch ein Venturirohr (15) gepumpt wird, wobei das Venturirohr (15) dadurch einen Unterdruck erzeugt, mit Hilfe des Unterdrucks den gasförmigen Strom des Chlordioxids aus dem Auslass (8) der Kartusche (2) absaugt und den gasförmigen Strom des Chlordioxids mit dem Bypass-Strom des zu desinfizierenden Wassers mischt.

7. Verfahren gemäß einem der vorangehenden Ansprüche, weiter **dadurch gekennzeichnet, dass** die Kartusche (2) einen zweiten Einlass (12) aufweist, wobei ein gasförmiger Strom eines Inertgases durch den zweiten Einlass (12) in die Kartusche (2) eingebracht wird.

8. Verfahren gemäß Anspruch 7, weiter **dadurch gekennzeichnet, dass** der gasförmige Strom des Inertgases durch den zweiten Einlass (12) eingesaugt wird, indem ein reduzierter Druck in der Kartusche (2) erzeugt wird.

9. Verfahren gemäß Anspruch 7 oder 8, weiter **dadurch gekennzeichnet, dass** der gasförmige Strom des Inertgases durch ein poröses Rohr (12) innerhalb der Kartusche (2) gesaugt wird.

10. Verfahren gemäß einem der vorangehenden Ansprüche, weiter **dadurch gekennzeichnet, dass** der gasförmige Strom des Chlordioxids von der Kartusche (2) in einen Chlordioxidbehälter (23) überführt wird.

11. Verfahren gemäß Anspruch 10, weiter **dadurch gekennzeichnet, dass** Wasser in den Chlordioxidbehälter (23) eingebracht wird, wodurch eine wässrige Chlordioxidlösung erzeugt wird.

12. Verfahren gemäß Anspruch 11, weiter **dadurch gekennzeichnet, dass** der gasförmige Strom des Chlordioxids in einen rezirkulierenden Strom der wässrigen Chlordioxidlösung des Chlordioxidbehälters (23) eingebracht wird.

13. Verfahren gemäß Anspruch 12, weiter **dadurch gekennzeichnet, dass** der rezirkulierende Strom durch ein Venturirohr (15) gepumpt wird, wobei das Venturirohr (15) dadurch einen Unterdruck erzeugt, mit Hilfe des Unterdrucks den gasförmigen Strom des Chlordioxids aus dem Auslass (8) der Kartusche (2) absaugt und den gasförmigen Strom des Chlordioxids mit dem rezirkulierenden Strom der wässrigen Chlordioxidlösung des Chlordioxidbehälters (23) mischt.

14. Verfahren gemäß einem der Ansprüche 10 bis 13, weiter **dadurch gekennzeichnet, dass** ein gasförmiger Strom der Atmosphäre innerhalb des Chlordioxidbehälters (23) in eine Adsorbervorrichtung (30) eingebracht wird.

15. Verfahren gemäß Anspruch 14, **dadurch gekennzeichnet, dass** ein gasförmiger Strom aus der Adsorbervorrichtung (30) entnommen wird und als das Inertgas durch den zweiten Einlass (12) in die Kartusche (2) eingebracht wird.

16. Eine Vorrichtung (1, 1') zum Erzeugen von Chlordioxid zur Desinfektion von Wasser, beinhaltend eine einen ersten Einlass (7) und einen Auslass (8) aufweisende Kartusche (2),
wobei die Kartusche (2) in Bezug auf Strömung mit trockenem oder feuchtem festen Natriumchlorat (9) zwischen dem ersten Einlass (7) und dem Auslass (8) gefüllt ist, und einen einen Auslass (11) aufweisenden Säurebehälter (3), wobei der Auslass (11) des Säurebehälters (3) über eine Säureleitung (10) mit dem ersten Einlass (7) der Kartusche (2) verbunden ist, wobei das Natriumchlorat in der Kartusche, verglichen mit der eingebrachten Säure, im Überschuss enthalten ist,
und der Auslass (8) der Kartusche (2) Chlordioxid zur Desinfektion von Wasser bereitstellt, und
einen Sensor zum Überwachen eines zunehmenden Flüssigkeitsstands in der Kartusche (2) während des Erzeugens von Chlordioxid und zum Messen eines vorgegebenen Werts des Flüssigkeitsstands (22) zur Anzeige eines Auswechselns der Kartusche (2).

17. Vorrichtung (1, 1') gemäß Anspruch 16, weiter **dadurch gekennzeichnet, dass** der Auslass (8) der Kartusche (2) mit einer Unterdruckleitung (14) verbunden ist.

18. Vorrichtung (1, 1') gemäß Anspruch 16 oder 17, weiter **dadurch gekennzeichnet, dass** die Kartusche (2) auslaufsicher ist und während des Betriebs unter Unterdruck gesetzt wird, wobei Säure nur in die Kartusche eingebracht werden kann, wenn Chlordioxid durch den Auslass abgesaugt wird.

19. Vorrichtung (1, 1') gemäß einem der Ansprüche 16 bis 18, weiter **dadurch gekennzeichnet, dass** ein Vakuum-Sicherheitsventil (19) in der Säureleitung (10) implementiert ist.

20. Vorrichtung (1, 1') gemäß einem der Ansprüche 16 bis 19, weiter **dadurch gekennzeichnet, dass** der Auslass (8) der Kartusche (2) mit einer Bypass-Leitung (6) des zu desinfizierenden Wassers verbunden ist.

21. Vorrichtung (1, 1') gemäß Anspruch 20, weiter **dadurch gekennzeichnet, dass** ein einen Unterdruckeinlass aufweisendes Venturirohr (15) in der Bypass-Leitung (6) eingebaut ist, wobei das Venturirohr (15) mit seinem Unterdruckeinlass mit dem Auslass (8) der Kartusche (2) verbunden ist.

22. Vorrichtung (1, 1') gemäß einem der Ansprüche 16 bis 21, weiter **dadurch gekennzeichnet, dass** die Kartusche (2) einen zweiten Einlass (12) aufweist, wobei der zweite Einlass (12) mit einer Inertgasversorgung (13) verbunden ist.

23. Vorrichtung (1, 1') gemäß Anspruch 22, weiter **dadurch gekennzeichnet, dass** es sich bei dem zweiten Einlass um ein poröses Rohr (12) in der Kartusche (2) handelt, das sich insbesondere von der Auslassseite in das Natriumchlorat (9) erstreckt.

24. Vorrichtung (1, 1') gemäß einem der Ansprüche 16 bis 23, weiter **dadurch gekennzeichnet, dass** der Auslass (8) der Kartusche (2) mit einem Chlordioxidbehälter (23) verbunden ist.

25. Vorrichtung (1, 1') gemäß Anspruch 24, weiter **dadurch gekennzeichnet, dass** der Chlordioxidbehälter (23) einen Wassereinlass (26) beinhaltet, wobei der Wassereinlass (26) mit einer Wasserversorgung verbunden ist.

26. Vorrichtung (1, 1') gemäß Anspruche 25, weiter **dadurch gekennzeichnet, dass** der Auslass (8) der Kartusche (2) mit einer Rezirkulationsleitung (24) verbunden ist, die eine wässrige Chlordioxidlösung des Chlordioxidbehälters (23) rezirkuliert.

27. Vorrichtung (1, 1') gemäß Anspruch 26, weiter **dadurch gekennzeichnet, dass** ein einen Unterdruckeinlass aufweisendes Venturirohr (15) in der Rezirkulationsleitung (24) eingebaut ist, wobei das Venturirohr (15) mit seinem Unterdruckeinlass mit dem Auslass (8) der Kartusche (2) verbunden ist.

28. Vorrichtung (1, 1') gemäß einem der Ansprüche 24 bis 27, weiter **dadurch gekennzeichnet, dass** der Chlordioxidbehälter (23) einen Auslass (28) für einen gasförmigen Strom der Atmosphäre darin aufweist, wobei der Behälter (23) über eine Gasleitung (29) mit einer Adsorbervorrichtung (30) verbunden ist.

29. Vorrichtung gemäß Anspruch 28, **dadurch gekennzeichnet, dass** die Gasleitung (29) zwischen dem Chlordioxidbehälter (23) und der Adsorbervorrichtung (30) mit dem zweiten Einlass (12) der Kartusche (2) verbunden ist.

## Revendications

1. Un procédé pour générer du dioxyde de chlore pour la désinfection de l'eau, comprenant les étapes consistant
à fournir une cartouche (2) ayant une première entrée (7) et une sortie (8), la cartouche (2) étant remplie, en termes d'écoulement, de chlorate de sodium solide sec ou humide (9) entre la première entrée (7) et la sortie (8), à introduire un flux d'un acide par la première entrée (7) jusque dans la cartouche (2), dans lequel le chlorate de sodium au sein de la cartouche est donné en excès par comparaison à l'acide introduit,
dans lequel l'acide réagit avec le chlorate de sodium (9) afin de former du dioxyde de chlore et de l'eau, l'eau et au moins une partie du chlorate de sodium qui n'a pas réagi (9) formant une solution de chlorate de sodium aqueuse saturée et
dans lequel le dioxyde de chlore forme une phase gazeuse au-dessus de la solution de chlorate de sodium aqueuse saturée,
à retirer par la sortie (8) un flux gazeux du dioxyde de chlore de la phase gazeuse,
à fournir le flux gazeux du dioxyde de chlore à introduire dans l'eau devant être désinfectée,
à surveiller durant la génération de dioxyde de chlore un niveau de liquide en augmentation au sein de la cartouche (2), et
à indiquer un remplacement de la cartouche, lorsque le niveau de liquide (22) a atteint une valeur spécifiée.

2. Le procédé de la revendication 1, **caractérisé en outre en ce que** le flux gazeux du dioxyde de chlore est évacué par aspiration par la sortie (8) en appliquant une pression réduite au niveau de la sortie (8),
dans lequel de l'acide n'est introduit dans la cartouche que lorsque le dioxyde de chlore est évacué par aspiration par la sortie.

3. Le procédé de la revendication 1 ou de la revendication 2, **caractérisé en outre en ce que** le flux d'acide est introduit par la première entrée (7) en générant une pression réduite à l'intérieur de la cartouche (2).

4. Le procédé de n'importe lesquelles des revendications précédentes, **caractérisé en outre en ce que** l'introduction du flux d'acide est contrôlée par vide.

5. Le procédé de n'importe lesquelles des revendications précédentes, **caractérisé en outre en ce que** le flux gazeux du dioxyde de chlore est introduit dans un flux de contournement de l'eau devant être désinfectée.

6. Le procédé de la revendication 5, **caractérisé en outre en ce que** le flux de contournement est pompé à travers un tube venturi (15), le tube venturi (15) génère de ce fait une basse pression, aspire, à l'aide de la basse pression, le flux gazeux du dioxyde de chlore de la sortie (8) de la cartouche (2) et mélange le flux gazeux du dioxyde de chlore avec le flux de contournement de l'eau devant être désinfectée.

7. Le procédé de n'importe lesquelles des revendications précédentes, **caractérisé en outre en ce que** la cartouche (2) ayant une deuxième entrée (12), un flux gazeux d'un gaz inerte étant introduit par la deuxième entrée (12) dans la cartouche (2).

8. Le procédé de la revendication 7, **caractérisé en outre en ce que** le flux gazeux du gaz inerte est introduit par aspiration par la deuxième entrée (12) en générant une pression réduite à l'intérieur de la cartouche (2).

9. Le procédé de la revendication 7 ou de la revendication 8, **caractérisé en outre en ce que** le flux gazeux du gaz inerte est aspiré à travers un tube poreux (12) au sein de la cartouche (2).

10. Le procédé de n'importe lesquelles des revendications précédentes, **caractérisé en outre en ce que** le flux gazeux du dioxyde de chlore est transféré de la cartouche (2) jusque dans un réservoir de dioxyde de chlore (23).

11. Le procédé de la revendication 10, **caractérisé en outre en ce que** de l'eau est introduite dans le réservoir de dioxyde de chlore (23), générant de ce fait une solution de dioxyde de chlore aqueuse.

12. Le procédé de la revendication 11, **caractérisé en outre en ce que** le flux gazeux du dioxyde de chlore est introduit dans un flux de recirculation de la solution de dioxyde de chlore aqueuse du réservoir de dioxyde de chlore (23).

13. Le procédé de la revendication 12, **caractérisé en outre en ce que** le flux de recirculation est pompé à travers un tube venturi (15), le tube venturi (15) génère de ce fait une basse pression, aspire, à l'aide de la basse pression, le flux gazeux du dioxyde de chlore de la sortie (8) de la cartouche (2) et mélange le flux gazeux dudit dioxyde de chlore avec le flux de recirculation de la solution de dioxyde de chlore aqueuse du réservoir de dioxyde de chlore (23).

14. Le procédé de n'importe lesquelles des revendications 10 à 13, **caractérisé en outre en ce qu'**un flux gazeux de l'atmosphère au sein du réservoir de dioxyde de chlore (23) est introduit dans un dispositif adsorbeur (30).

15. Le procédé de la revendication 14, **caractérisé en ce qu'**un flux gazeux est extrait du dispositif adsorbeur (30) et est introduit comme étant le gaz inerte par la deuxième entrée (12) jusque dans la cartouche (2).

16. Un dispositif (1, 1') pour générer du dioxyde de chlore pour la désinfection de l'eau, comprenant une cartouche (2) ayant une première entrée (7) et une sortie (8),
la cartouche (2) étant remplie, en termes d'écoulement, avec du chlorate de sodium solide sec ou humide (9) entre la première entrée (7) et la sortie (8), et
un réservoir d'acide (3) ayant une sortie (11), la sortie (11) du réservoir d'acide (3) est raccordée par le biais d'un conduit d'acide (10) avec la première entrée (7) de la cartouche (2), dans lequel le chlorate de sodium au sein de la cartouche est contenu en excès par comparaison à l'acide introduit,
et la sortie (8) de la cartouche (2) fournit du dioxyde de chlore pour la désinfection de l'eau, et
un capteur pour surveiller durant la génération de dioxyde de chlore un niveau de liquide en augmentation au sein de la cartouche (2) et pour mesurer une valeur spécifiée du niveau de liquide (22) pour indiquer un remplacement de la cartouche (2).

17. Le dispositif (1, 1') de la revendication 16, **caractérisé en outre en ce que** la sortie (8) de la cartouche (2) est raccordée à un conduit basse pression (14).

18. Le dispositif (1, 1') de la revendication 16 ou de la revendication 17, **caractérisé en outre en ce que** la cartouche (2) est étanche et est réglée sous une pression basse durant le fonctionnement, dans lequel de l'acide ne peut être introduit dans la cartouche que lorsque le dioxyde de chlore est évacué par aspiration par la sortie.

19. Le dispositif (1, 1') de n'importe lesquelles des revendications 16 à 18, **caractérisé en outre en ce qu'**une soupape de sécurité de dépression (19) est mise en place dans le conduit d'acide (10).

20. Le dispositif (1, 1') de n'importe lesquelles des revendications 16 à 19, **caractérisé en outre en ce que** la sortie (8) de la cartouche (2) est raccordée à un conduit de contournement (6) de l'eau devant être désinfectée.

21. Le dispositif (1, 1') de la revendication 20, **caractérisé en outre en ce qu'**un tube venturi (15) ayant une entrée basse pression est monté dans le conduit de contournement (6), le tube venturi (15) avec son entrée basse pression est raccordé à la sortie (8) de la cartouche (2).

22. Le dispositif (1, 1') de n'importe lesquelles des revendications 16 à 21, **caractérisé en outre en ce que** la cartouche (2) ayant une deuxième entrée (12), la deuxième entrée (12) est raccordée à une alimentation en gaz inerte (13).

23. Le dispositif (1, 1') de la revendication 22, **caractérisé en outre en ce que** la deuxième entrée est un tube poreux (12) au sein de la cartouche (2), lequel s'étend en particulier du côté sortie jusque dans le chlorate de sodium (9).

24. Le dispositif (1, 1') de n'importe lesquelles des revendications 16 à 23, **caractérisé en outre en ce que** la sortie (8) de la cartouche (2) est raccordée à un réservoir de dioxyde de chlore (23).

25. Le dispositif (1, 1') de la revendication 24, **caractérisé en outre en ce que** le réservoir de dioxyde de chlore (23) comprend une entrée d'eau (26), l'entrée d'eau (26) est raccordée à une alimentation en eau.

26. Le dispositif (1, 1') de la revendication 25, **caractérisé en outre en ce que** la sortie (8) de la cartouche (2) est raccordée à un conduit de recirculation (24) faisant recirculer une solution de dioxyde de chlore aqueuse du réservoir de dioxyde de chlore (23).

27. Le dispositif (1, 1') de la revendication 26, **caractérisé en outre en ce qu'**un tube venturi (15) ayant une entrée basse pression est monté dans le conduit de recirculation (24), le tube venturi (15) avec son entrée basse pression est raccordé à la sortie (8) de la cartouche (2).

28. Le dispositif (1, 1') de n'importe lesquelles des revendications 24 à 27, **caractérisé en outre en ce que** le réservoir de dioxyde de chlore (23) ayant une sortie (28) pour un flux gazeux de l'atmosphère au sein de celui-ci, le réservoir (23) est raccordé par le biais d'un conduit de gaz (29) à un dispositif adsorbeur (30).

29. Le dispositif de la revendication 28, **caractérisé en ce que** le conduit de gaz (29) entre le réservoir de dioxyde de chlore (23) et le dispositif adsorbeur (30) est raccordé à la deuxième entrée (12) de la cartouche (2).
